# EUROPÄISCHE PATENTSCHRIFT

(11) **EP 1 278 647 B1**
(45) Veröffentlichungstag und Bekanntmachung des Hinweises auf die Patenterteilung: **07.07.2004**
(21) Anmeldenummer: 01936000.7
(22) Anmeldetag: 25.04.2001
(51) Int. Cl.: B60K 26/02, G05G 1/14

(54) **FAHRPEDALMODUL**
ACCELERATOR PEDAL MODULE
MODULE DE PEDALE D'ACCELERATEUR

(30) Priorität: 26.04.2000 DE 10020486
(43) Veröffentlichungstag der Anmeldung: 29.01.2003
(73) Patentinhaber: ROBERT BOSCH GMBH, 70442 Stuttgart (DE)
(72) Erfinder: STEINDL, Sandra, 77830 Buehlertal (DE); MEYER, Dirk, 71364 Winnenden (DE); HUESGES, Mario, 77830 Buehlertal (DE); CABA, Radek, 370 04 Crski Budijovice (CZ)
(86) Internationale Anmeldenummer: PCT/DE2001/001575
(87) Internationale Veröffentlichungsnummer: WO 2001/081110

(56) Entgegenhaltungen:
- EP-A- 0 748 713
- WO-A-97/12780
- DE-A- 4 426 549
- GB-A- 2 349 447
- US-A- 5 408 899
- US-A- 6 098 971
- PATENT ABSTRACTS OF JAPAN vol. 009, no. 249 (M-419), 5. Oktober 1985 (1985-10-05) & JP 60 099729 A (NISSAN JIDOSHA KK), 3. Juni 1985 (1985-06-03) in der Anmeldung erwähnt

## Beschreibung

### Stand der Technik

Die Erfindung geht aus von einem Fahrpedalmodul nach der Gattung des Anspruchs 1 bzw. von einem Fahrpedalmodul nach der Gattung des Anspruchs 12.

Die japanische Patent-Offenlegungsschrift Nr. 60-99729 (JP-A-60-99729) zeigt ein Fahrpedalmodul mit einem an einer Haltestruktur schwenkbar gelagerten Pedalhebel und mit einem eine Winkelstellung des Pedalhebels erfassenden und ein entsprechendes elektrisches Signal liefernden Sensor sowie mit einer Rückstellfederung zum Rückstellen des Pedalhebels in eine Ruhestellung. Über einen Lagerzapfen kann der Pedalhebel sehr gut und präzise und spielfrei an der an einer Fahrzeugkarosserie befestigten Haltestruktur gelagert werden.

Ausgehend von dem in der JP-A-60-99729 gezeigten Fahrpedal ist es Aufgabe der Erfindung, zu erreichen, daß der Pedalhebel präzise gelagert ist und daß bei Betätigung des Pedalhebels eine Reibhysterese auftritt, wobei diese Reibhysterse mit einfachen Mitteln erreicht und genau definierbar sein soll und zusätzlich soll noch erreicht werden, daß die Reibhysterese bei zunehmender Betätigung des Pedalhebels zunimmt.

Die Patentschrift US 5,408,899 zeigt eine Pedalanordnung, bei der zwecks Erzeugung von Reibung mehrere Distanzstücke vorgesehen sind und sich die Windungen der Rückstellfedern auf den Distanzstücken abstützen. Bei einer Bewegung des Pedalhebels entstehen Relativbewegungen zwischen den Distanzstücken und den Rückstellfedern. Dadurch entsteht Reibung zwischen den Distanzstücken und dem Lagerzapfen, sowie Reibung zwischen den Distanzstücken untereinander und auch Reibung zwischen den Distanzstücken und den Rückstellfedern. Nachteilig bei dieser sehr aufwendigen Konstruktion ist, daß die Reibung sehr stark von den Maßtoleranzen der Bauteile abhängt und ein weiterer Nachteil ist die Reibung zwischen den Distanzstücken und den Rückstellfedern, weil dadurch die Rückstellfedern, die ein sicherheitsrelevantes Bauteil darstellen, bei längerer Benutzung besonders leicht versagen können. Ein weiterer Nachteil ist, daß die Reibung nicht in unmittelbarer Beziehung zur Rückstellkraft steht.

Die internationale Veröffentlichung WO 97/12780 zeigt ein Fahrpedalmodul, bei dem an dem Pedalhebel ein Halbkreis mit einem relativ großen Radius vorgesehen ist, und die Haltestruktur hat eine Lagerschale, in der der Halbkreis des Pedalhebels gelagert ist. Der Radius des Halbkreises und der Lagerschale muß zwecks Erreichung der gewünschten Reibung relativ groß sein. Nachteilig bei dieser Konstruktion ist, daß die Lagerung des Pedalhebels und das Erzeugen der gewünschten Reibung unmittelbar an derselben Stelle geschieht. Weil die zwischen dem Halbkreis und der Lagerschale vorgesehene Reibfläche nicht nur zur Erzeugung der Reibkraft sondern auch zur Lagerung des Pedalhebels dient, müssen an die Formgenauigkeit sowie an die Oberflächengüte und Konzentrizität der Reibfläche sehr hohe Anforderungen gestellt werden. Mit anderen Worten, weil die Lagerstelle nicht nur zur Lagerung des Pedalhebels, sondern auch zur Erzeugung der Reibung dient, müssen bei der konstruktiven Ausführung nicht nur Lagergesichtspunkte, sondern auch Reibungsgesichtspunkte berucksichtigt werden. Dadurch müssen Kompromisse eingegangen werden, wodurch die gesamte Konstruktion etwas labil und der Pedalhebel nicht besonders präzise gelagert ist, was bei der Erzeugung des elektrischen Signals bei hoher Auflösung festgestellt werden kann. Auch ist der Aufwand zum Herstellen des bekannten Fahrpedalmoduls ziemlich hoch.

Die deutsche Offenlegungsschrift DE 44 26 549 A1 zeigt ein Fahrpedalmodul, bei dem der Pedalhebel in zwei kurzen mit einem Reibbelag versehenen Schalenbögen gelagert ist. Die Schalenbögen haben zwecks Erreichung einer ausreichenden Reibung einen relativ großen Durchmesser. Aufgrund des großen Durchmessers der Schalenbögen und weil die Schalenbögen relativ kurz sind, muß festgestellt werden, daß bei dieser Art der Lagerung des Pedalhebels die Lagerung des Pedalhebels ziemlich labil ist. Deshalb kann bei diesem Fahrpedalmodul kaum mit einem präzisen elektrischen Signal gerechnet werden.

### Vorteile der Erfindung

Das erfindungsgemäße Fahrpedalmodul mit den kennzeichnenden Merkmalen des Anspruchs 1 bzw. mit den kennzeichnenden Merkmalen des Anspruchs 12 hat demgegenüber den Vorteil, daß mit geringem Aufwand ein präzises Lagern des Pedalhebels an der Haltestruktur erreicht werden kann, und es kann eine vom betätigten Schwenkwinkel des Pedalhebels abhängige Reibkraft erreicht werden. Ein besonderer Vorteil ist, daß das Erzeugen der Reibkraft mit einfachen Mitteln erreicht wird. Von besonderem Vorteil ist, daß das Lagern des Pedalhebels und das Erzeugen der Reibkraft mit voneinander unabhängigen Mitteln geschieht. Die Mittel zum Lagern des Pedalhebels und die Mittel zum Erzeugen der Reibkraft können jede für sich für den jeweiligen Zweck optimal ausgelegt werden. Dadurch kann ein hohes Maß an Präzision bei der Lagerung des Pedalhebels erreicht werden. Das präzise Lagern des Pedalhebels hat den Vorteil, daß ein präzises, die Stellung des Pedalhebels angebendes elektrisches Signal erzeugbar ist.

Durch die in den Unteransprüchen aufgeführten Maßnahmen sind vorteilhafte Weiterbildungen und Verbesserungen des im Hauptanspruch angegebenen Fahrpedalmoduls möglich.

Sind zwei Reibflächen und zwei Reibelemente vorgesehen, so hat dies den Vorteil, daß die Lagerung des Pedalhebels im Bereich der Lagerstelle im Wesentlichen symmetrisch gestaltet werden kann, wodurch die Präzision bei der Lagerung des Pedalhebels noch etwas verbessert werden kann. Insbesondere können die beiden Reibflächen und Reibelemente, in Längsrichtung des Pedalhebels betrachtet, symmetrisch angebracht werden.

Mit dem Quersteg können die beiden Reibelemente sehr einfach miteinander verbunden werden und es kann die Rückstellfederung auf den Quersteg wirken. Dadurch wird die Konstruktion insgesamt sehr einfach und man erreicht auf vorteilhafte Weise, daß ein gleichmäßiges Aufteilen der Kraft der Rückstellfederung auf die beiden Reibelemente erzielbar ist.

Mit dem Koppelhebel kann auf vorteilhafte Weise die Kraft der Rückstellfederung auf das Reibelement übertragen werden.

Wird der Koppelhebel einstückig-gelenkig mit der Haltestruktur verbunden, so hat dies den Vorteil, daß weniger Bauteile zusammengefügt werden müssen.

Ist der Koppelhebel einstückig-gelenkig mit dem Reibelement verbunden, so hat dies den Vorteil, daß das Reibelement und der Koppelhebel gemeinsam hergestellt werden können und es müssen beim Zusammenbauen des Fahrpedalmoduls weniger Bauteile zusammengefügt werden.

### Zeichnung

Bevorzugt ausgewählte, besonders vorteilhafte Ausführungsbeispiele der Erfindung sind in der Zeichnung vereinfacht dargestellt und in der nachfolgenden Beschreibung näher erläutert. Es zeigen die Figur 1 einen Längsschnitt durch ein erstes Ausführungsbeispiel, die Figur 2 eine Einzelheit des ersten Ausführungsbeispiels, die Figur 3 einen Querschnitt durch das erste Ausführungsbeispiel, die Figur 4 einen Längsschnitt durch ein zweites Ausführungsbeispiel, die Figur 5 Einzelheiten des zweiten Ausführungsbeispiels, die Figur 6 einen Teilschnitt durch das zweite Ausführungsbeispiel, die Figur 7 einen Teilschnitt durch ein drittes Ausführungsbeispiel, die Figur 8 einen Teilschnitt durch ein viertes Ausführungsbeispiel, die Figur 9 einen Längsschnitt durch ein fünftes Ausführungsbeispiel und die Figur 10 ein Diagramm, das die Abhängigkeit der Betätigungskraft F vom Betätigungsweg s des Pedalhebels zeigt.

### Beschreibung der Ausführungsbeispiele

Das erfindungsgemäß ausgeführte Fahrpedalmodul 1 kann zur Steuerung verschiedener Antriebsmaschinen verwendet werden. Die Antriebsmaschine ist beispielsweise ein Ottomotor, dessen Drosselklappe mit einem Stellmotor verstellt wird. In diesem Fall dient das Fahrpedalmodul zum Abgeben von elektrischen Signalen, die dem die Drosselklappe verstellenden Stellmotor zugeführt werden. Die Antriebsmaschine kann aber auch beispielsweise ein Dieselmotor oder ein Elektromotor sein, wobei auch in diesen Fällen vom Fahrpedalmodul 1 elektrische Signale ausgehen, welche, entsprechend umgeformt, die Leistung der Antriebsmaschine steuern.

Das Fahrpedalmodul 1 ist vorzugsweise direkt im Aktionsbereich des Kraftfahrzeugführers an einem Fahrzeugteil des Kraftfahrzeugs befestigt. Der Pedalhebel 3 des Fahrpedalmoduls 1 wird häufig auch als Gaspedal bezeichnet.

In allen Figuren sind gleiche oder gleichwirkende Teile mit denselben Bezugszeichen versehen. Sofern nichts Gegenteiliges erwähnt bzw. in der Zeichnung dargestellt ist, gilt das anhand eines der Figuren erwähnte und Dargestellte auch bei den anderen Ausführungsbeispielen. Sofern sich aus den Erläuterungen nichts anderes ergibt, sind die Einzelheiten der verschiedenen Ausführungsbeispiele miteinander kombinierbar.

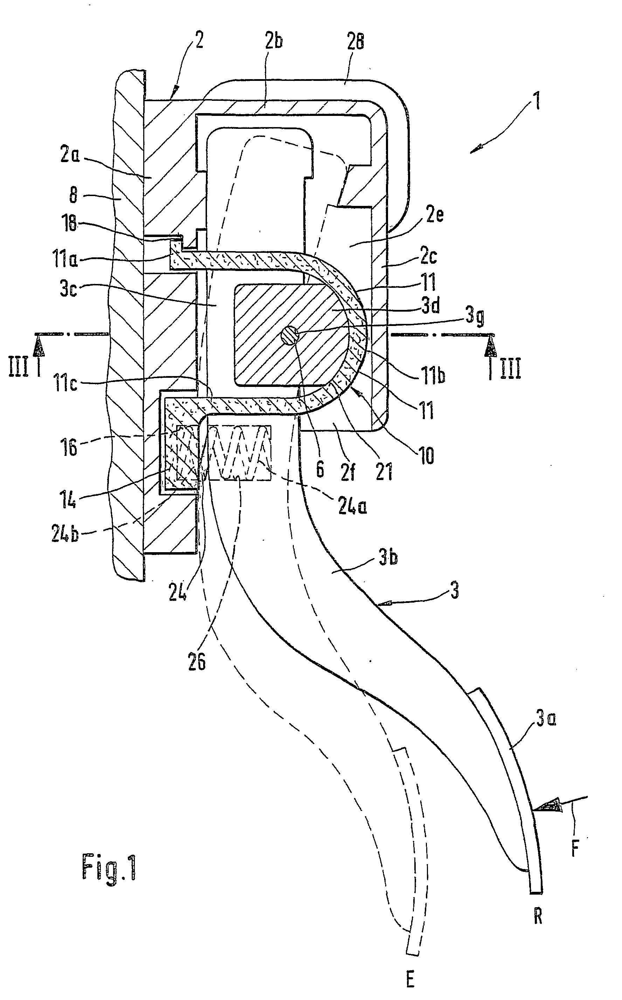

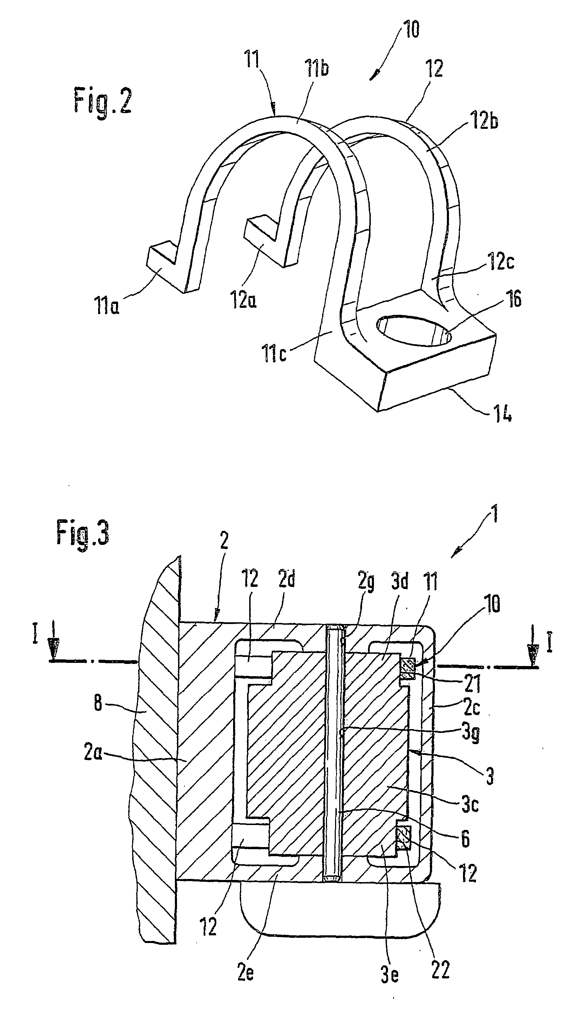

Die Figuren 1, 2 und 3 zeigen ein bevorzugt ausgewähltes, besonders vorteilhaftes erstes Ausführungsbeispiel. Die Figur 1 zeigt einen Längsschnitt durch das Fahrpedalmodul 1. Die in der Figur 1 dargestellte Schnittebene und Blickrichtung ist in der Figur 3 mit I - I angedeutet. Die Figur 2 zeigt den Bremseinsatz 10 des Fahrpedalmoduls 1 vor seinem Einbau in das Fahrpedalmodul 1. Die Figur 3 zeigt einen Querschnitt des Fahrpedalmoduls 1. Die in der Figur 3 dargestellte Schnittebene und Blickrichtung ist in der Figur 1 mit III - III angedeutet.

Das Fahrpedalmodul 1 umfaßt eine Haltestruktur 2 und einen Pedalhebel 3. Die Haltestruktur 2 ist gehäuseartig ausgebildet. Die Haltestruktur 2 hat eine Grundseite 2a, eine Rückseite 2b, eine Oberseite 2c, eine erste Seitenwand 2d, eine zweite Seitenwand 2e und eine Öffnung 2f. Der Pedalhebel 3 hat eine Trittplatte 3a, einen Schaft 3b und einen Lagerbereich 3c. Quer zur Längsrichtung des Pedalhebels 3 stehen seitlich am Lagerbereich 3c ein erster Überstand 3d und ein zweiter Überstand 3e über den Lagerbereich 3c hinaus. Im Lagerbereich 3c des Pedalhebels 3 gibt es eine Bohrung 3g; und eine Gehäusebohrung 2g verläuft durch die Seitenwände 2d, 2e der Haltestruktur 2. In die Gehäusebohrung 2g der Haltestruktur 2 und in die Bohrung 3g des Pedalhebels 3 ist ein Lagerzapfen 6 eingesetzt. Der Lagerzapfen 6 ist mit Pressung in den Lagerbereich 3c des Pedalhebels 3 eingebaut und mit leichter Pressung in die erste Seitenwand 2d und in die zweite Seitenwand 2e der Haltestruktur 2. Durch den Lagerzapfen 6 ist sichergestellt, daß der Pedalhebel 3 ohne zu wackeln präzise und exakt an der Haltestruktur 2 schwenkbar gelagert ist.

Die Haltestruktur 2 ist an einem Karosserieteil 8 eines Kraftfahrzeugs befestigt. Der Lagerbereich 3c des Pedalhebels 3 befindet sich innerhalb der gehäuseförmigen Haltestruktur 2. Der Schaft 3b des Pedalhebels 3 ragt durch die Öffnung 2f aus der Haltestruktur 2 heraus. Am abstehenden Ende des Schafts 3b befindet sich die Trittplatte 3a.

Beim Fahrpedalmodul 1 ist ein Bremseinsatz 10 vorgesehen. Der Bremseinsatz 10 ist in der Figur 2 in Schrägansicht separat dargestellt.

Bei dem für die Figuren 1, 2 und 3 ausgewählten Ausführungsbeispiel besteht der Bremseinsatz 10 im Wesentlichen aus einem ersten Reibelement 11 und einem zweiten Reibelement 12 sowie aus einem Quersteg 14. Das Reibelement 11 hat eine basisseitige Anlenkstelle 11a, einen Reibbereich 11b und eine federseitige Anlenkstelle 11c. Der Reibbereich 11b befindet sich ungefähr auf halber Strecke zwischen den beiden Anlenkstellen 11a und 11c. Das zweite Reibelement 12 ist spiegelbildlich zum Reibelement 11 ausgebildet und es wirkt parallel zum Reibelement 11. Das zweite Reibelement 12 hat eine basisseitige Anlenkstelle 12a, einen Reibbereich 12b und eine federseitige Anlenkstelle 12c. Der zweite Reibbereich 12b befindet sich ungefähr auf halber Strecke zwischen den beiden Anlenkstellen 12a und 12c. Der Quersteg 14 verbindet die federseitige Anlenkstelle 11c des Reibelements 11 mit der federseitigen Anlenkstelle 12c des zweiten Reibelements 12. In der Mitte zwischen den beiden Reibelementen 11, 12 gibt es im Quersteg 14 eine in Form einer Sackbohrung ausgebildete Federanlenkstelle 16. Der Quersteg 14 verbindet die federseitige Anlenkstelle 11c mit der federseitigen Anlenkstelle 12c. Wie insbesondere die Figur 2 zeigt, ist bei dem in den Figuren 1, 2 und 3 dargestellten Ausführungsbeispiel der die Reibelemente 11, 12 und den Quersteg 14 umfassende Bremseinsatz 10 einstückig ausgebildet. Der ganze Bremseinsatz 10 kann zusammen in einer gemeinsamen Form durch Spritzgießen hergestellt werden.

In der Haltestruktur 2 gibt es eine dem Pedalhebel 3 abgewandte Haltefläche 18.

An dem Überstand 3d des Pedalhebels 3 gibt es eine konzentrisch zum Lagerzapfen 6 verlaufende Reibfläche 21; und an dem zweiten Überstand 3e des Pedalhebels 3 ist konzentrisch zum Lagerzapfen 6 eine zweite Reibfläche 22 vorgesehen.

Die basisseitige Anlenkstelle 11a des Reibelements 11 ist an der Haltefläche 18 der Haltestruktur 2 befestigt. Mit anderen Worten, die basisseitige Anlenkstelle 11a und die Haltefläche 18 sind so vorgesehen, daß das Reibelement 11 an der Haltestruktur 2 eingehängt und von dieser festgehalten werden kann. Die Reibfläche 21 des Pedalhebels 3 weist in Richtung weg von der Grundseite 2a der Haltestruktur 2. Der Reibbereich 11b des Reibelements 11 liegt an der Reibfläche 21 des Pedalhebels 3 an. Die basisseitige Anlenkstelle 11a und die federseitige Anlenkstelle 11c überragen die Reibfläche 21. Die Reibfläche 21 und der Reibbereich 11b befinden sich zwischen der basisseitigen Anlenkstelle 11a und der federseitigen Anlenkstelle 11c.

Der Pedalhebel 3 ist zwischen einer unbetätigten Ruhestellung R und einer vollständig betätigten Endstellung E verstellbar. Der Pedalhebel 3 ist in seiner Ruhestellung R dargestellt. Zusätzlich sind in der Figur 1 einzelne Bereiche des Pedalhebels 3 mit gestrichelten Linien dargestellt, wenn sich der Pedalhebel 3 in seiner Endstellung E befindet.

Das Fahrpedalmodul 1 hat eine Rückstellfederung 24. Die Rückstellfederung 24 hat eine an dem Pedalhebel 3 angreifende erste Wirkseite 24a sowie eine an der federseitigen Anlenkstelle 11c und an der federseitigen Anlenkstelle 12c der beiden Reibelemente 11 beziehungsweise 12 angreifende zweite Wirkseite 24b. Am Pedalhebel 3 ist eine Federanlenkstelle 26 vorgesehen. Die Federanlenkstelle 26 ist in Form einer Sackbohrung ausgeführt und bildet somit ausreichend Platz zur Aufnahme eines Teils der Rückstellfederung 24 und zur Führung der Rückstellfederung 24. Die beiden Sackbohrungen der Federanlenkstellen 16 und 26 sind im Wesentlichen fluchtend zueinander. Die Rückstellfederung 24 hat die Form einer schraubenförmig gewundenen Druckfeder. Die Rückstellfederung 24 kann auch aus mehreren parallel nebeneinander wirkenden Einzelfedern bestehen. Die erste Wirkseite 24a befindet sich innerhalb der Sackbohrung der Federanlenkstelle 26, und die zweite Wirkseite 24b der Rückstellfederung 24 befindet sich innerhalb der Sackbohrung der Federanlenkstelle 16.

Die Rückstellfederung 24 drückt den Pedalhebel 3 in seine unbetätigte Ruhestellung R.

Die zweite Wirkseite 24b der Rückstellfederung 24 drückt über den Quersteg 14 und über die federseitige Anlenkstelle 11c den Reibbereich 11b des Reibelements 11 gegen die am Pedalhebel 3 vorgesehene Reibfläche 21. Die Haltefläche 18 der Haltestruktur 2 hält die basisseitige Anlenkstelle 11a des Reibelements 11 mit einer Kraft, die im Wesentlichen gleich groß ist wie die Kraft, mit der die Rückstellfederung 24 die federseitige Anlenkstelle 11c beaufschlagt. Die über die basisseitige Anlenkstelle 11a auf das Reibelement 11 einwirkende Kraft und die und über die federseitige Anlenkstelle 11c einwirkende Kraft ergibt vektoriell addiert diejenige Kraft, mit der der Reibbereich 11b des Reibelements 11 gegen die Reibfläche 21 des Pedalhebels 3 gedrückt wird. Wegen der Kraft, mit der der Reibbereich 11b des Bremseinsatzes 10 gegen die Reibfläche 21 des Pedalhebels 3 drückt, ergibt sich bei einer Betätigung des Pedalhebels 3 eine der Bewegung des Pedalhebels 3 entgegengerichtete Reibkraft.

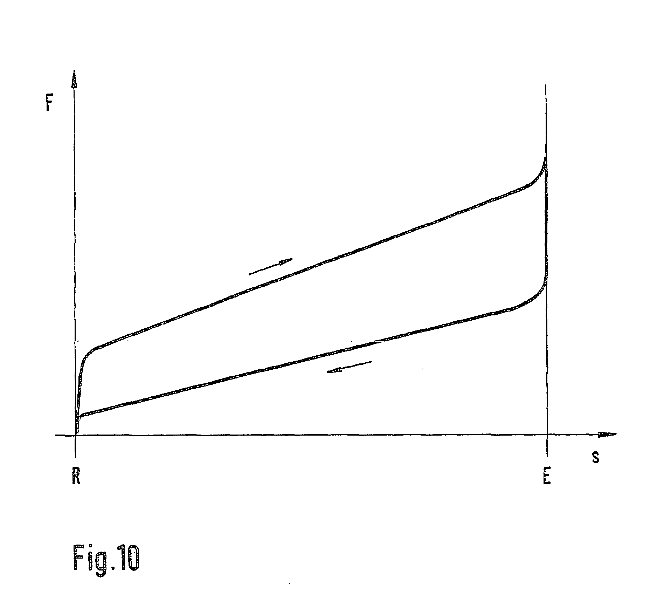

In der Figur 10 ist die Betätigungskraft F in Abhängigkeit zum Verstellweg s dargestellt. Die Betätigungskraft F ist die während des Betätigens des Pedalhebels 3 auf die Trittplatte 3a wirkende Kraft. Beim Betätigen des Pedalhebels 3 von der Ruhestellung R in die Endstellung E ist die Betätigungskraft F wesentlich größer als die Betätigungskraft F, die auftritt, wenn der Pedalhebel 3 von der betätigten Endstellung E in die Ruhestellung R zurückbetätigt wird. In der Figur 10 zeigt die obere schräg verlaufende Linie die Betätigungskraft F bei der Betätigung des Pedalhebels 3 von der Ruhestellung R in die Endstellung E, und die untere schräg verlaufende Linie zeigt die Betätigungskraft F während einer Betätigung des Pedalhebels 3 von der betätigten Endstellung E in die Ruhestellung R.

Weil im Bereich der Ruhestellung R die Rückstellfederung 24 weniger gespannt ist und weil deshalb die von der Rückstellfederung 24 aufgebrachte Kraft kleiner ist als die von der Rückstellfederung 24 aufgebrachte Kraft während sich der Pedalhebel 3 in der betätigten Endstellung E befindet, ist die Reibkraft kleiner, wenn sich der Pedalhebel 3 im Bereich der Ruhestellung R befindet, als wenn sich der Pedalhebel 3 im Bereich der Endstellung E befindet. Dies ist auch in der Figur 10 dargestellt, denn, wie man der Figur 10 entnehmen kann, ist der Abstand zwischen der schräg verlaufenden oberen Linie und der schräg verlaufenden unteren Linie im Bereich der Ruhestellung R deutlich kleiner als im Bereich der betätigten Endstellung E. Dies ergibt beim Betätigen des Pedalhebels 3 ein erwünschtes, besonders angenehmes Gefühl für den Fahrerfuß.

Der Bremseinsatz 10 ist im Bereich des zweiten Reibelements 12 in gleicher Weise ausgeführt wie im Bereich des Reibelements 11, und das zweite Reibelement 12 wirkt in gleicher Weise auf den Pedalhebel 3 wie das Reibelement 11.

An der Haltestruktur 2 ist ein Sensor 28 angebracht. Der Sensor 28 hat einen nicht dargestellten Sensorhebel. Die Bewegungen des Sensorhebels sind an die Bewegungen des Pedalhebels 3 gekoppelt. Je nach Stellung des Sensorhebels bzw. des Pedalhebels 3 liefert der Sensor 28 über eine nicht dargestellte elektrische Leitung ein elektrisches Signal an eine nicht dargestellte elektrische Steuerung. Die elektrische Steuerung wiederum steuert beispielsweise eine nicht dargestellte Drosselklappe, mit der die Leistung einer Antriebsmaschine gesteuert werden kann. Die Verbindung zwischen dem Sensor 28 und dem Pedalhebel 3 geschieht beispielsweise in der Weise, wie es in der WO 97/12780 ausführlich beschrieben und dargestellt ist.

Das Reibelement 11 ist zumindest in seinem mittleren Bereich, d. h. im Bereich des Reibbereichs 11b ziemlich biegeweich, so daß sich der Reibbereich 11b durch die Kraft der Rückstellfederung 24 gut der Reibfläche 21 anschmiegt. Dies bietet den Vorteil, daß an die Formgenauigkeit und an die Konzentrizität der Reibfläche 21 nur sehr geringe Anforderungen gestellt werden müssen. Auch an die Herstellung und Formgenauigkeit des Reibelements 11 sind nur sehr geringe Anforderungen zu stellen. Dies hat den Vorteil, daß die Reibflächen 21 und 22 mit sehr geringem Aufwand hergestellt werden können. Auch die Reibelemente 11 und 12 können sehr einfach, mit einem sehr einfachen Herstellungsverfahren hergestellt werden. Deshalb kann der Pedalhebel 3 und auch der Bremseinsatz 10 durch ein wenig aufwendiges Verfahren, beispielsweise durch Spritzgießen hergestellt werden. Anschließend ist keine Nachbearbeitung der Reibflächen 21 und 22 sowie auch keine Nachbearbeitung der Reibelemente 11 und 12 erforderlich.

Die Figuren 3, 4, 5 und 6 zeigen ein zweites, bevorzugt ausgwähltes, besonders vorteilhaftes Ausführungsbeispiel.

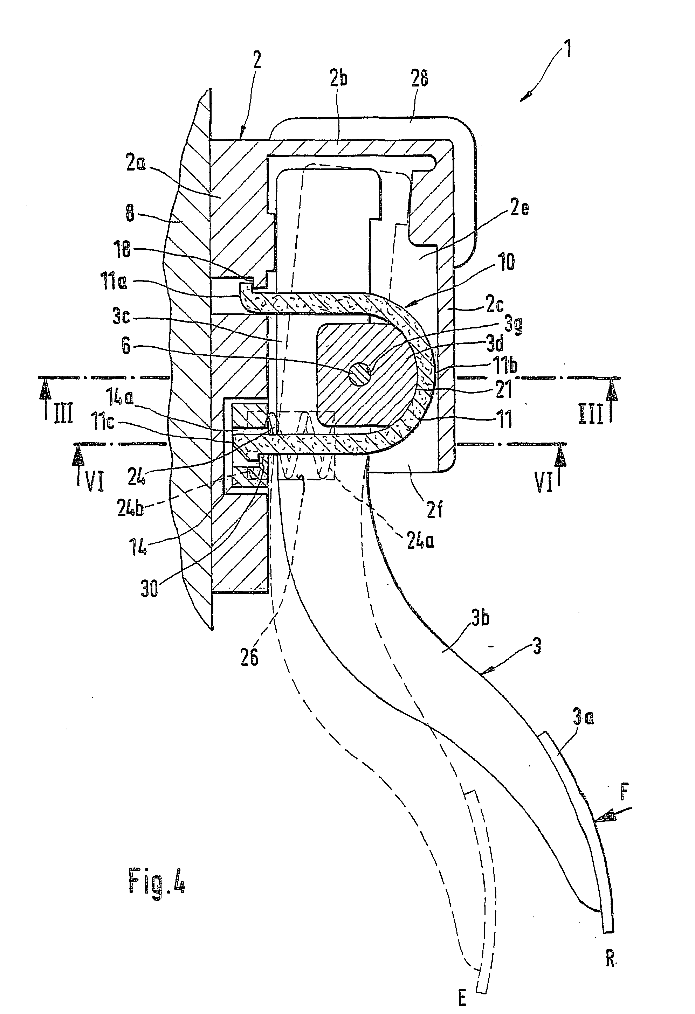

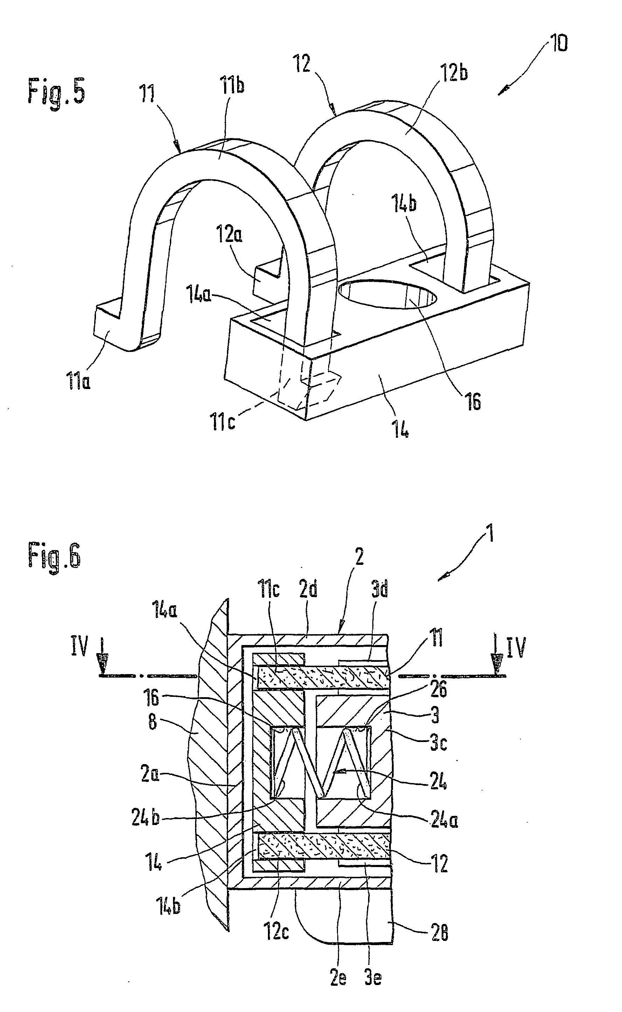

Die Figur 3 gilt sowohl für das erste Ausführungsbeispiel als auch für das zweite Ausführungsbeispiel. Die in der Figur 3 gezeigte Schnittebene ist auch in der Figur 4 mit III - III markiert. Die Figur 4 zeigt einen Längsschnitt des Fahrpedalmoduls 1. Die in der Figur 4 dargestellte Schnittebene ist in der Figur 3 mit I - I und in der Figur 6 mit IV - IV markiert. Die Figur 5 zeigt den Bremseinsatz 10 des zweiten Ausführungsbeispiels als Einzelheit. Die Figur 6 zeigt einen Teilschnitt des Fahrpedalmoduls 1. Die in der Figur 6 dargestellte Schnittebene und Blickrichtung ist in der Figur 4 mit VI - VI markiert.

Im Unterschied zu dem in der Figur 2 dargestellten Bremseinsatz 10 ist der in der Figur 5 gezeigte Bremseinsatz 10 des zweiten Ausführungsbeispiels nicht einstückig, sondern der Bremseinsatz 10 wird durch Zusammenstecken aus dem Reibelement 11, dem zweiten Reibelement 12 und dem Quersteg 14 zusammengesetzt.

Im Bereich der basisseitigen Anlenkstellen 11a und 12a ist der Bremseinsatz 10 beim zweiten Ausführungsbeispiel in gleicher Weise mit der Haltestruktur 2 verbunden wie beim ersten Ausführungsbeispiel.

Beim zweiten Ausführungsbeispiel gibt es in dem Quersteg 14 eine abgestuft ausgeführte Durchgangsöffnung 14a und eine ebenfalls abgestuft ausgeführte Durchgangsöffnung 14b. Im Verlauf der Durchgangsöffnung 14a gibt es eine Haltefläche 30. Die Haltefläche 30 ist dem Pedalhebel 3 abgewandt. Die federseitige Anlenkstelle 11c des Reibelements 11 ist hakenförmig ausgeführt. Die Anlenkstelle 11c ist so dimensioniert, daß sie mit leichter Pressung in die Durchgangsöffnung 14a hineingedrückt werden kann. Ein Wiederherausziehen der federseitigen Anlenkstelle 11c aus der Durchgangsöffnung 14a ist praktisch nicht möglich, weil sich dabei die hakenförmige federseitige Anlenkstelle 11c an der an dem Quersteg 14 vorgesehenen Haltefläche 30 abstützt. Das zweite Reibelement 12 ist wie das Reibelement 11 in gleicher Weise mit dem Quersteg 14 verbunden.

Der Bremseinsatz 10 kann durch einfaches Zusammenstecken der sehr einfach herstellbaren Reibelemente 11, 12 und des Querstegs 14 zusammengebaut werden.

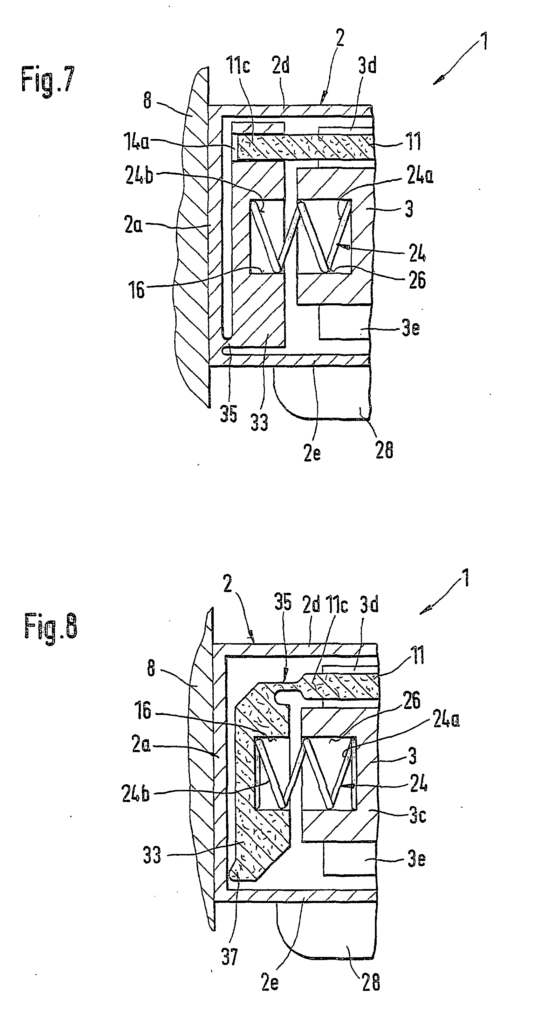

Die Figur 7 zeigt einen Teilschnitt durch ein drittes, bevorzugt ausgewähltes, besonders vorteilhaftes Ausführungsbeispiel.

Die in der Figur 7 dargestellte Schnittebene entspricht ungefähr der in der Figur 6 dargestellten Schnittebene beim zweiten Ausführungsbeispiel. Nicht in der Figur 7 dargestellte Einzelheiten entsprechen im Wesentlichen den anhand des ersten und des zweiten Ausführungsbeispiels erläuterten Einzelheiten.

Bei dem in der Figur 7 gezeigten Ausführungsbeispiel ist ein Koppelhebel 33 an die Haltestruktur 2 angeformt. Der Koppelhebel 33 kann gemeinsam mit der Haltestruktur 2 in einer gemeinsamen Form gießtechnisch hergestellt werden.

Der Koppelhebel 33 ist nur in einem sehr schmalen Bereich mit der Haltestruktur 2 verbunden. Dadurch entsteht an dem schmalen Bereich eine einstückig-gelenkige Verbindung 35 zwischen dem Koppelhebel 33 und der Haltestruktur 2. Die gelenkige Verbindung 35 befindet sich an einem Ende des Koppelhebels 33, und am gegenüberliegenden Ende des Koppelhebels 33 ist im Koppelhebel 33 die Durchgangsöffnung 14a vorgesehen. Die Verbindung 35 dient als Scharnier zwischen dem Koppelhebel 33 und der Haltestruktur 2. In der Durchgangsöffnung 14a des Koppelhebels 33 steckt die federseitige Anlenkstelle 11c des Reibelements 11, wie es insbesondere anhand der Figur 5 beim zweiten Ausführungsbeispiel erläutert ist.

Die Federanlenkstelle 16 ist am Koppelhebel 33 vorgesehen. Die Rückstellfederung 24 wirkt über die Federanlenkstelle 16 auf den Koppelhebel 33 und über den Koppelhebel 33 sowie über die federseitige Anlenkstelle 11c auf das Reibelement 11. Dadurch drückt die Rückstellfederung 24 auch beim dritten Ausführungsbeispiel den Reibbereich 11b des Reibelements 11 gegen die am Pedalhebel 3 vorgesehene Reibfläche 21.

Im Unterschied zum ersten Ausführungsbeispiel und im Unterschied zum zweiten Ausführungsbeispiel entfällt beim dritten Ausführungsbeispiel das zweite Reibelement 12. Dadurch müssen beim dritten Ausführungsbeispiel weniger Bauteile hergestellt und zusammengefügt werden.

Weil beim dritten Ausführungsbeispiel das zweite Reibelement 12 entfällt, kann am Pedalhebel 3 auch auf die zweite Reibfläche 22 und auf den zweiten Überstand 3e verzichtet werden.

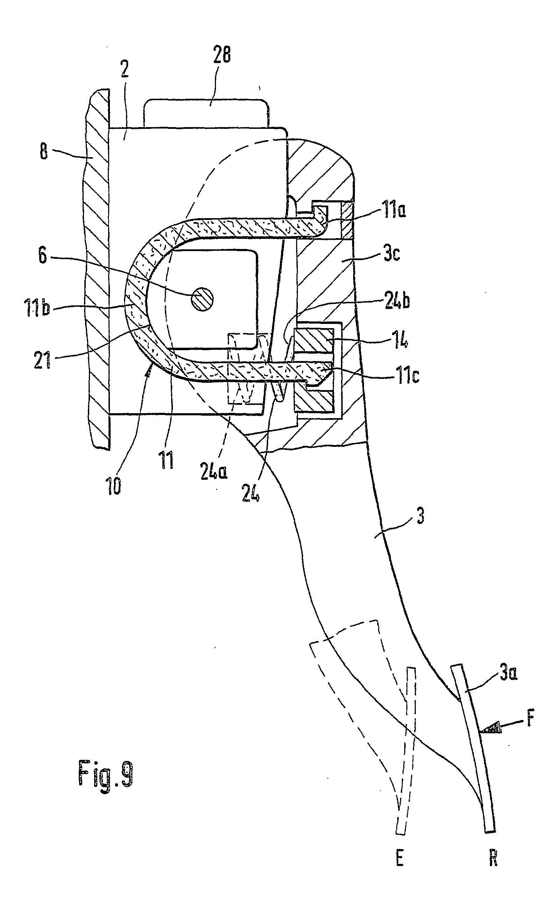

Die Figur 8 zeigt ein viertes bevorzugt ausgewähltes, besonders vorteilhaftes Ausführungsbeispiel.

Im Unterschied zu dem in der Figur 7 dargestellten Ausführungsbeispiel ist bei dem in der Figur 8 gezeigten Ausführungsbeispiel die einstückig-gelenkige Verbindung nicht zwischen dem Koppelhebel 33 und der Haltestruktur 2 vorgesehen, sondern die einstückig-gelenkige Verbindung 35 befindet sich zwischen dem Koppelhebel 33 und der federseitigen Anlenkstelle 11c des Reibelements 11. Dies bietet den Vorteil, daß das Reibelement 11 und der Koppelhebel 33 gemeinsam in einer Form gießtechnisch bzw. spritztechnisch hergestellt werden können.

Auf dem der Verbindung 35 abgewandten Ende des Koppelhebels 33 stützt sich der Koppelhebel 33 über ein Kipplager 37 an der Grundseite 2a der Haltestruktur 2 ab. Dadurch ist sichergestellt, daß die von der zweiten Wirkseite 24b der Rückstellfederung 24 auf den Kipphebel 33 einwirkende Kraft über den Kipphebel 33 und über die einstückig-gelenkige Verbindung 35 auf das Reibelement 11 und vom Reibelement 11 auf die Reibfläche 21 des Pedalhebels 3 übertragen wird.

Die Figur 9 zeigt einen Längsschnitt durch ein fünftes, bevorzugt ausgewähltes, besonders vorteilhaftes Ausführungsbeispiel.

Bei den in den Figuren 1 bis 8 beispielhaft dargestellten Ausführungen ist der Bremseinsatz 10 mit dem Reibelement 11 und gegebenenfalls mit dem zweiten Reibelement 12 der Haltestruktur 2 zugeordnet. Entsprechend ist die Reibfläche 21 dem Pedalhebel 3 zugeordnet. Bei einer Betätigung des Pedalhebels 3 stehen die Reibelemente 11, 12 des Bremseinsatzes 10 still, und es wird die dem Pedalhebel 3 zugeordnete Reibfläche 21 entlang dem stillstehenden Reibbereich 11b, 12b des Bremseinsatzes 10 bewegt. Im Unterschied dazu sind bei dem in der Figur 9 gezeigten Ausführungsbeispiel die Reibfläche 21 und gegebenenfalls die weitere Reibfläche 22 der Haltestruktur 2 zugeordnet. Somit stehen die Reibfläche 21, und gegebenenfalls die weitere Reibfläche 22, auch bei einer Betätigung des Pedalhebels 3 still. Bei dem in der Figur 9 gezeigten Ausführungsbeispiel ist der Bremseinsatz 10 mit dem Reibelement 11, und gegebenenfalls mit dem weiteren Reibelement 12, dem Pedalhebel 3 zugeordnet. Bei einer Bewegung des Pedalhebels 3 bewegt sich der Bremseinsatz 10 mit dem Reibelement 11 und gegebenenfalls mit dem weiteren Reibelement 12 gemeinsam mit dem Pedalhebel 3.

Bei dem in der Figur 9 gezeigten Ausführungsbeispiel drückt die erste Wirkseite 24a der Rückstellfederung 24 auf die stillstehende Haltestruktur 2, und die zweite Wirkseite 24b der Rückstellfederung 24 drückt auf den Quersteg 14 des Bremseinsatzes 10 und drückt somit den bei einer Betätigung des Pedalhebels 3 sich bewegenden Reibbereich 11b des Reibelements 11 gegen die feststehende Reibfläche 21. Die zweite Wirkseite 24b der Rückstellfederung 24 wirkt über den Quersteg 14, über das Reibelement 11 und über die Anlenkstelle 11a des Reibelements 11 am Pedalhebel 3 auf den Pedalhebel 3 mit dem Bestreben, den Pedalhebel 3 in seine Ruhestellung R zu verstellen.

Bei dem in der Figur 9 gezeigten Ausführungsbeispiel sind gegenüber den in den Figuren 1 bis 8 dargestellten Ausführungsbeispielen die Zuordnungen der Bremseinrichtung 10, und damit der Reibelemente 11 und 12, sowie der Reibflächen 22 vertauscht. Genauer gesagt, die Bremseinrichtung 10 mit den Reibelementen 11 und 12 ist nicht der Haltestruktur 2 sondern dem Pedalhebel 3 zugeordnet. Und die Reibflächen 21 sind nicht dem Pedalhebel 3 sondern der Haltestruktur 2 zugeordnet. Alle anderen Einzelheiten können wahlweise wie anhand der in den Figuren 1 bis 8 erläuterten Ausführungsbeispiele entsprechend angepaßt ausgeführt sein. Um unnötige Wiederholungen zu vermeiden, wird wegen den in der Figur 9 nicht gezeigten Einzelheiten auf die Figuren 1 bis 8 verwiesen.

Bei den ausgewählten, in den Figuren 1 bis 9 dargestellten Ausführungsbeispielen ist der Lagerzapfen 6 in der Gehäusebohrung 2g der Haltestruktur 2 und in der Bohrung 3g des Pedalhebels 3 gelagert. Es ist aber auch möglich, den Lagerzapfen 6 direkt an den Pedalhebel 3 seitlich vorstehend anzuformen. In diesem Fall wird auf die Bohrung 3g verzichtet. Daneben ist es aber auch möglich, den Lagerzapfen 6 direkt an die Haltestruktur 2 anzuformen. In diesem Fall wird auf die Gehäusebohrung 2g verzichtet.

Bei den in den Figuren 1 bis 8 dargestellten Ausführungsbeispielen sind die Reibelemente 11, 12 an den basisseitigen Anlenkstellen 11a, 11b an die Haltestruktur 2 angeclipst. Es ist auch möglich, die Reibelemente 11, 12 an den basisseitigen Anlenkstellen 11a, 11b einstückig an die Haltestruktur 2 anzuformen. Entsprechendes gilt auch bei dem in der Figur 9 gezeigten Ausführungsbeispiel. Hier kann beispielsweise das Reibelement 11 an seiner basisseitigen Anlenkstelle 11a einstückig an den Pedalhebel 3 angeformt sein.

## Patentansprüche

1. Fahrpedalmodul zum Steuern der Leistung einer Antriebsmaschine eines Kraftfahrzeugs, mit einem über einen Lagerzapfen (6) an einer Haltestruktur (2) schwenkbar gelagerten Pedalhebel (3), mit einem eine Winkelstellung des Pedalhebels (3) erfassenden und ein entsprechendes elektrisches Signal an eine Steuerung liefernden Sensor (28) und mit einer Rückstellfederung (24)' mit einer ersten Wirkseite (24a) und mit einer zweiten Wirkseite (24b), wobei die Rückstellfederung (24) zum Rückstellen des Pedalhebels (3) in eine Ruhestellung (R) mit der ersten Wirkseite (24a) an dem Pedalhebel (3) angreift, an dem Pedalhebel (3) mindestens eine im wesentlichen konzentrisch zum Lagerzapfen (6) verlaufende Reibfläche (21) vorgesehen ist und mindestens ein an der Reibfläche (21) anliegendes Reibelement (10, 11, 12) vorgesehen ist, **dadurch gekennzeichnet, daß** das Reibelement (10, 11, 12) eine basisseitige Anlenkstelle (11a, 12a) und eine federseitige Anlenkstelle (11c, 12c) hat, wobei sich die Reibfläche (21) zwischen der basisseitigen Anlenkstelle (11a, 12a) und der federseitigen Anlenkstelle (11c, 12c) befindet und die basisseitige Anlenkstelle (11a, 12a) an der Haltestruktur (2) angelenkt ist und die zweite Wirkseite (24b) der Rückstellfederung (24) die federseitige Anlenkstelle (11c, 12c) des Reibelements (10, 11, 12) beaufschlagt.

2. Fahrpedalmodul nach Anspruch 1, **dadurch gekennzeichnet, daß** an dem Pedalhebel (3) eine im wesentlichen konzentrisch zum Lagerzapfen (6) verlaufende zweite Reibfläche (22) vorgesehen ist und das Fahrpedalmodul (1) ein an der zweiten Reibfläche (22) anliegendes zweites Reibelement (12) mit einer basisseitigen Anlenkstelle (12a) und einer federseitigen Anlenkstelle (12c) hat und sich die zweite Reibfläche (22) zwischen der basisseitigen Anlenkstelle (12a) und der federseitigen Anlenkstelle (12c) des zweiten Reibelements (22) befindet und die zweite Wirkseite (24b) der Rückstellfederung (24) die federseitige Anlenkstelle (12c) des zweiten Reibelements (12) beaufschlagt.

3. Fahrpedalmodul nach Anspruch 2, **dadurch gekennzeichnet, daß** die federseitige Anlenkstelle (11c) des ersten Reibelements (11) und die federseitige Anlenkstelle (12c) des zweiten Reibelements (12) über einen Quersteg (14) miteinander verbunden sind.

4. Fahrpedalmodul nach Anspruch 3, **dadurch gekennzeichnet, daß** der Quersteg (14) zusammen mit dem ersten Reibelement (11) und dem zweiten Reibelement (12) einstückig hergestellt ist.

5. Fahrpedalmodul nach Anspruch 3, **dadurch gekennzeichnet, daß** der Quersteg (14) sowie das erste Reibelement (11) und das zweite Reibelement (12) aus mehreren zusammengefügten Einzelteilen (10, 11, 12, 14) besteht.

6. Fahrpedalmodul nach Anspruch 3, **dadurch gekennzeichnet, daß** der Quersteg (14) mit dem mindestens einen Reibelement (11) gelenkig verbunden ist.

7. Fahrpedalmodul nach einem der Ansprüche 3 bis 6, **dadurch gekennzeichnet, daß** die Rückstellfederung (24) den Quersteg (14) beaufschlagt.

8. Fahrpedalmodul nach Anspruch 1, **dadurch gekennzeichnet, daß** die Rückstellfederung (24) über einen sich an der Haltestruktur (2) abstützenden Koppelhebel (33) die federseitige Anlenkstelle (11c) des mindestens einen Reibelements (11) beaufschlagt.

9. Fahrpedalmodul nach Anspruch 8, **dadurch gekennzeichnet, daß** der Koppelhebel (33) über eine einstückig-gelenkige Verbindung (35) mit der Haltestruktur (2) verbunden ist.

10. Fahrpedalmodul nach Anspruch 8 , **dadurch gekennzeichnet, daß** der Koppelhebel (33) über eine einstückig-gelenkige Verbindung (35) mit der federseitigen Anlenkstelle (11c) des mindestens einen Reibelements (11) verbunden ist.

11. Fahrpedalmodul nach Anspruch 8 oder 9, **dadurch gekennzeichnet, daß** der Koppelhebel (33) starr mit der federseitigen Anlenkstelle (11c) des mindestens einen Reibelements (11) verbunden ist.

12. Fahrpedalmodul zum Steuern der Leistung einer Antriebsmaschine eines Kraftfahrzeugs, mit einem über einen Lagerzapfen (6) an einer Haltestruktur (2) schwenkbar gelagerten Pedalhebel (3), mit einem eine Winkelstellung des Pedalhebels (3) erfassenden und ein entsprechendes elektrisches Signal an eine Steuerung liefernden Sensor (28) und mit einer Rückstellfederung (24) mit einer ersten Wirkseite (24a) und mit einer zweiten Wirkseite (24b), wobei die Rückstellfederung (24) zum Rückstellen des Pedalhebels (3) in eine Ruhestellung (R) mit der ersten Wirkseite (24a) an der Haltestruktur (2) angreift, **dadurch gekennzeichnet, daß** an der Haltestruktur (2) mindestens eine im wesentlichen konzentrisch zum Lagerzapfen (6) verlaufende Reibfläche (21) vorgesehen ist und daß mindestens ein an der Reibfläche (21) anliegendes Reibelement (10, 11, 12) vorgesehen ist und das Reibelement (10, 11, 12) eine basisseitige Anlenkstelle (11a, 12a) und eine federseitige Anlenkstelle (11c, 12c) hat, wobei sich die Reibfläche (21) zwischen der basisseitigen Anlenkstelle (11a, 12a) und der federseitigen Anlenkstelle (11c, 12c) befindet und die basisseitige Anlenkstelle (11a, 12a) an dem Pedalhebel (3) angelenkt ist und die zweite Wirkseite (24b) der Rückstellfederung (24) die federseitige Anlenkstelle (11c, 12c) des Reibelements (10, 11, 12) beaufschlagt (Fig. 9).

13. Fahrpedalmodul nach Anspruch 12, **dadurch gekennzeichnet, daß** an der Haltestruktur (2) eine im wesentlichen konzentrisch zum Lagerzapfen (6) verlaufende zweite Reibfläche(22) vorgesehen ist und das Fahrpedalmodul (1) ein an der zweiten Reibfläche (22) anliegendes zweites Reibelement (12) mit einer basisseitigen Anlenkstelle (12a) und einer federseitigen Anlenkstelle (12c) hat und sich die zweite Reibfläche (22) zwischen der basisseitigen Anlenkstelle (12a) und der federseitigen Anlenkstelle (12c) des zweiten Reibelements (12) befindet und die zweite Wirkseite (24b) der Rückstellfederung (24) die federseitige Anlenkstelle (12c) des zweiten Reibelements (12) beaufschlagt.

14. Fahrpedalmodul nach Anspruch 13, **dadurch gekennzeichnet, daß** die federseitige Anlenkstelle (11c) des ersten Reibelements (11) und die federseitige Anlenkstelle (12c) des zweiten Reibelements (12) über einen Quersteg (14) miteinander verbunden sind.

## Claims

1. Accelerator pedal module for controlling the power of an engine of a motor vehicle, with a pedal lever (3) pivotably mounted on a holding structure (2) via a bearing journal (6), with a sensor (28) detecting an angular position of the pedal lever (3) and delivering a corresponding electrical signal to a control, and with a return springing (24) having a first active side (24a) and having a second active side (24b), the return springing (24) acting with the first active side (24a) on the pedal lever (3) for the return of the pedal lever (3) into a position of rest (R), the pedal lever (3) having provided on it at least one friction surface (21) running essentially concentrically to the bearing journal (6), and at least one friction element (10, 11, 12) which bears against the friction surface (21) being provided, **characterized in that** the friction element (10, 11, 12) has a base-side articulation point (11a, 12a) and a spring-side articulation point (11c, 12c), the friction surface (21) being located between the base-side articulation point (11a, 12a) and the spring-side articulation point (11c, 12c), the base-side articulation point (11a, 12a) being articulated on the holding structure (2) and the second active side (24b) of the return springing (24) acting upon the spring-side articulation point (11c, 12c) of the friction element (10, 11, 12).

2. Accelerator pedal module according to Claim 1, **characterized in that** the pedal lever (3) has provided on it a second friction surface (22) running essentially concentrically to the bearing journal (6), and the accelerator pedal module (1) has a second friction element (12) bearing against the second friction surface (22) and having a base-side articulation point (12a) and a spring-side articulation point (12c), and the second friction surface (22) is located between the base-side articulation point (12a) and the spring-side articulation point (12c) of the second friction element (22), and the second active side (24b) of the return springing (24) acts upon the spring-side articulation point (12c) of the second friction element (12).

3. Accelerator pedal module according to Claim 2, **characterized in that** the spring-side articulation point (11c) of the first friction element (11) and the spring-side articulation point (12c) of the second friction element (12) are connected to one another via a transverse web (14).

4. Accelerator pedal module according to Claim 3, **characterized in that** the transverse web (14) is produced in one piece together with the first friction element (11) and with the second friction element (12).

5. Accelerator pedal module according to Claim 3, **characterized in that** the transverse web (14) and also the first friction element (11) and the second friction element (12) consists of a plurality of assembled individual parts (10, 11, 12, 14).

6. Accelerator pedal module according to Claim 3, **characterized in that** the transverse web (14) is connected in an articulated manner to the at least one friction element (11).

7. Accelerator pedal module according to one of Claims 3 to 6, **characterized in that** the return springing (24) acts upon the transverse web (14).

8. Accelerator pedal module according to Claim 1, **characterized in that** the return springing (24) acts upon the spring-side articulation point (11c) of the at least one friction element (11) via a coupling lever (33) supported on the holding structure (2).

9. Accelerator pedal module according to Claim 8, **characterized in that** the coupling lever (33) is connected to the holding structure (2) via a one-piece articulated connection (35).

10. Accelerator pedal module according to Claim 8, **characterized in that** the coupling lever (33) is connected to the spring-side articulation point (11c) of the at least one friction element (11) via a one-piece articulated connection (35).

11. Accelerator pedal module according to Claim 8 or 9, **characterized in that** the coupling lever (33) is connected rigidly to the spring-side articulation point (11c) of the at least one friction element (11).

12. Accelerator pedal module for controlling the power of an engine of a motor vehicle, with a pedal lever (3) pivotably mounted on a holding structure (2) via a bearing journal (6), with a sensor (28) detecting an angular position of the pedal lever (3) and delivering a corresponding electrical signal to a control, and with a return springing (24) having a first active side (24a) and having a second active side (24b), the return springing (24) acting with the first active side (24a) on the holding structure (2) for the return of the pedal lever (3) into a position of rest (R), **characterized in that** the holding structure (2) has provided on it at least one friction surface (21) running essentially concentrically to the bearing journal (6), and **in that** at least one friction element (10, 11, 12) bearing against the friction surface (21) is provided, and the friction element (10, 11, 12) has a base-side articulation point (11a, 12a) and a spring-side articulation point (11c, 12c), the friction surface (21) being located between the base-side articulation point (11a, 12a) and the spring-side articulation point (11c, 12c), the base-side articulation point (11a, 12a) being articulated on the pedal lever (3), and the second active side (24b) of the return springing (24) acting upon the spring-side articulation point (11c, 12c) of the friction element (10, 11, 12) (Fig. 9).

13. Accelerator pedal module according to Claim 12, **characterized in that** the holding structure (2) has provided on it a second friction surface (22) running essentially concentrically to the bearing journal (6), and the accelerator pedal module (1) has a second friction element (12) bearing against the second friction surface (22) and having a base-side articulation point (12a) and a spring-side articulation point (12c), and the second friction surface (22) is located between the base-side articulation point (12a) and the spring-side articulation point (12c) of the second friction element (12), and the second active side (24b) of the return springing (24) acts upon the spring-side articulation point (12c) of the second friction element (12).

14. Accelerator pedal module according to Claim 13, **characterized in that** the spring-side articulation point (11c) of the first friction element (11) and the spring-side articulation point (12c) of the second friction element (12) are connected to one another via a transverse web (14).

## Revendications

1. Module de pédale d'accélérateur pour commander la puissance d'un moteur d'entraînement d'un véhicule automobile, comportant un levier de pédale (3) monté de façon à pouvoir pivoter sur une structure de maintien (2) au moyen d'un tourillon (6), un capteur (28) qui détecte une position angulaire du levier de pédale (3) et qui fournit un signal électrique correspondant à une commande, et un ressort de rappel (24) muni d'un premier côté actif (24a) et d'un deuxième côté actif (24b), le ressort de rappel (24) destiné à rappeler le levier de pédale (3) dans une position de repos (R) s'appliquant par le premier côté actif (24a) sur le levier de pédale (3), avec sur le levier de pédale (3) au moins une surface de frottement (21) qui s'étend presque concentriquement par rapport au tourillon (6) et avec au moins un élément de frottement (10, 11, 12) qui s'applique sur la surface de frottement (21),
**caractérisé en ce que**
l'élément de frottement (10, 11, 12) a un point d'articulation (11a, 12a) côté base et un point d'articulation (11c, 12c) côté ressort, la surface de frottement (21) se trouvant entre le point d'articulation (11a, 12a) côté base et le point d'articulation (11c, 12c) côté ressort, et le point d'articulation (11a, 12a) côté base étant articulé sur la structure de maintien (2) alors que le deuxième côté actif (24b) du ressort de rappel (24) agit sur le point d'articulation (11c, 12c) côté ressort de l'élément de frottement (10, 11, 12).

2. Module de pédale d'accélérateur selon la revendication 1,
**caractérisé en ce que**
sur le levier de pédale (3) on prévoit une deuxième surface de frottement (22) qui s'étend presque concentriquement par rapport au tourillon (6) et le module de pédale d'accélérateur (1) a un deuxième élément de frottement (12) qui s'applique sur la deuxième surface de frottement (22) et qui comporte un point d'articulation (12a) côté base et un point d'articulation (12c) côté ressort, et la deuxième surface de frottement (22) se trouve entre le point d'articulation (12a) côté base et le point d'articulation (12c) côté ressort de la deuxième surface de frottement (22), alors que le deuxième côté actif (24b) du ressort de rappel (24) agit sur le point d'articulation (12c) côté ressort du deuxième élément de frottement (12).

3. Module de pédale d'accélérateur selon la revendication 2,
**caractérisé en ce que**
le point d'articulation (11c) côté ressort du premier élément de frottement (11) et le point d'articulation (12c) côté ressort du deuxième élément de frottement (12) sont reliés l'un à l'autre au moyen d'une traverse (14).

4. Module de pédale d'accélérateur selon la revendication 3,
**caractérisé en ce que**
la traverse (14) conjointement avec le premier élément de frottement (11) et le deuxième élément de frottement (12) est fabriquée en une seule pièce.

5. Module de pédale d'accélérateur selon la revendication 3,
**caractérisé en ce que**
la traverse (14) ainsi que le premier élément de frottement (11) et le deuxième élément de frottement (12) se composent de plusieurs pièces particulières (10, 11, 12, 14) assemblées.

6. Module de pédale d'accélérateur selon la revendication 3,
**caractérisé en ce que**
la traverse (14) est reliée de façon articulée à au moins l'élément de frottement (11).

7. Module de pédale d'accélérateur selon l'une des revendications 3 à 6,
**caractérisé en ce que**
le ressort de rappel (24) agit sur la traverse (14).

8. Module de pédale d'accélérateur selon la revendication 1,
**caractérisé en ce que**
le ressort de rappel (24) agit sur le point d'articulation (11c) côté ressort de l'élément de frottement (11) au moins au nombre d'un par l'intermédiaire d'un levier de couplage (33) qui s'appuie sur la structure de maintien (2).

9. Module de pédale d'accélérateur selon la revendication 8,
**caractérisé en ce que**
le levier de couplage (33) est relié à la structure de maintien (2) au moyen d'une liaison (35) articulée en une seule pièce.

10. Module de pédale d'accélérateur selon la revendication 8,
**caractérisé en ce que**
le levier de couplage (33) est relié au point d'articulation (11c) côté ressort de au moins un élément de frottement (11) par l'intermédiaire d'une liaison (35) articulée en une seule pièce.

11. Module de pédale d'accélérateur selon la revendication 8 ou 9,
**caractérisé en ce que**
le levier de couplage (33) est relié rigidement au point d'articulation (11c) côté ressort de au moins un élément de frottement (11).

12. Module de pédale d'accélérateur pour commander la puissance d'un moteur d'entraînement d'un véhicule automobile, comportant un levier de pédale (3) monté de façon à pouvoir pivoter sur une structure de maintien (2) au moyen d'un tourillon (6), un capteur (28) qui détecte une position angulaire du levier de pédale (3) et qui fournit un signal électrique correspondant à une commande et un ressort de rappel (24) muni d'un premier côté actif (24a) et d'un deuxième côté actif (24b), le ressort de rappel (24) destiné à rappeler le levier de pédale (3) dans une position de repos (R) s'appliquant par le premier côté actif (24a) sur la structure de maintien (2),
**caractérisé en ce que**
sur la structure de maintien (2) on prévoit au moins une surface de frottement (21) qui s'étend presque concentriquement par rapport au tourillon (6) et au moins un élément de frottement (10, 11, 12) qui s'applique sur la surface de frottement (21), et l'élément de frottement (10, 11, 12) a un point d'articulation (11a, 12a) côté base et un point d'articulation (11c, 12c) côté ressort alors que la surface de frottement (21) se trouvant entre le point d'articulation (11a, 12a) côté base et le point d'articulation (11c, 12c) côté ressort alors que le point d'articulation (11a, 12a) côté base est articulé sur le levier de pédale (3) et que le deuxième côté actif (24b) du ressort de rappel (24) agit sur le point d'articulation (11c, 12c) côté ressort de l'élément de frottement (10, 11, 12) (figure 9).

13. Module de pédale d'accélérateur selon la revendication 12,
**caractérisé en ce que**
sur la structure de maintien (2) on prévoit une deuxième surface de frottement (22) qui s'étend presque concentriquement par rapport au tourillon (6) et le module de pédale d'accélérateur (1) a un deuxième élément de frottement (12) qui s'applique sur la deuxième surface de frottement (22) et qui comporte un point d'articulation (12a) côté base et un point d'articulation (12c) côté ressort, et la deuxième surface de frottement (22) se trouve entre le point d'articulation (12a) côté base et le point d'articulation (12c) côté ressort de la deuxième surface de frottement (22), alors que le deuxième côté actif (24b) du ressort de rappel (24) agit sur le point d'articulation (12c) côté ressort du deuxième élément de frottement (12).

14. Module de pédale d'accélérateur selon la revendication 13,
**caractérisé en ce que**
le point d'articulation (11c) côté ressort du premier élément de frottement (11) et le point d'articulation (12c) côté ressort du deuxième élément de frottement (12) sont reliés l'un à l'autre au moyen d'une traverse (14).
